# FASCICULE DE BREVET EUROPEEN

(11) **EP 1 318 934 B1**
(45) Date de publication et mention de la délivrance du brevet: **03.12.2008**
(21) Numéro de dépôt: 01969856.2
(22) Date de dépôt: 05.09.2001
(51) Int. Cl.: B60T 13/567

(54) **SERVOFREIN**
BREMSKRAFTVERSTÄRKER
BRAKE BOOSTER

(30) Priorité: 13.09.2000 FR 0011753
(43) Date de publication de la demande: 18.06.2003
(73) Titulaire: ROBERT BOSCH GMBH, 70442 Stuttgart (DE)
(72) Inventeur: LEBOISNE, Cédric, F-75011 PARIS (FR); GENDRIN, Stéphane, F-35170 BRUZ (FR); FOURCADE, Jean, F-77420 CHAMPS SUR MARNE (FR); PIEL, Jean-Marc, F-93700 DRANCY (FR)
(74) Mandataire: Hurwic, Aleksander Wiktor
(86) Numéro de dépôt international: PCT/FR2001/002746
(87) Numéro de publication internationale: WO 2002/022418

(56) Documents cités:
- DE-A- 4 202 820
- DE-A- 4 436 297
- DE-C- 19 729 158

## Description

La présente invention concerne un amplificateur de freinage assisté par dépression, ou servofrein, comportant un dispositif de mesure de pression.

Le document DE-C-19 729 158 divulgue un servomoteur comportant un servofrein comprenant une enveloppe rigide constituée de deux coquilles, le couvercle et le cylindre, assemblés à l'aide d'un tirant traversant et comportant une chambre avant et une chambre arrière à volume variable, la chambre avant étant reliée en fonctionnement en permanence à une première source de pression tandis que la chambre arrière est reliée à une seconde source de pression, ledit servofrein comportant un capteur de pression mesurant la différence de pression entre la chambre arrière et la chambre avant, ledit capteur de pression étant monté à l'extrémité avant d'une conduite de fluide pneumatique, ladite conduite présentant une structure évidée qui définit au moins une chambre de transmission de la pression de la chambre arrière vers le capteur de pression, la conduite présentant des orifices de communication entre ladite chambre de pression arrière et la chambre de transmission.

Un amplificateur de freinage connu comprend une enveloppe rigide constituée de deux coquilles, formant d'une part le couvercle et d'autre part le cylindre, qui sont serties entre elles et sur lesquelles viennent se fixer respectivement les vis de couvercle pour l'assemblage sur le tablier du véhicule (arrière du servofrein) et les vis de cylindre pour la fixation du maître-cylindre (avant du servofrein). A l'intérieur de l'enveloppe du servofrein, une chambre avant à volume variable est séparée d'une chambre arrière à volume variable par une membrane étanche souple et par une jupe rigide entraînant un piston pneumatique prenant appui, par l'intermédiaire d'une tige de poussée, sur le piston primaire d'un maître cylindre tandem d'un circuit hydraulique de freinage. La chambre avant dirigée vers le maître cylindre tandem est reliée hydrauliquement à une source de vide alors que la chambre arrière est reliée hydrauliquement, de manière contrôlée par une valve, à une source de fluide propulseur, typiquement de l'air sous pression atmosphérique.

Au repos, c'est-à-dire lorsque le conducteur n'actionne pas la pédale de frein, les chambres avant et arrière sont connectées alors que la chambre arrière est isolée par rapport à la pression atmosphérique. Lors du freinage, on isole tout d'abord la chambre avant par rapport à la chambre arrière, puis on admet de l'air dans la chambre arrière.

Dans ce type de servofrein, il est important de pouvoir mesurer la pression régnant au moins dans la chambre arrière au moyen d'un module de capteur monté sur la face avant du servofrein. Généralement, cette transmission de la mesure de la pression s'effectue à l'aide d'un tube hélicoïdal interne à l'enveloppe.

De manière à, d'une part, augmenter la rigidité et, d'autre part, réduire le poids du servofrein par diminution de l'épaisseur de l'enveloppe, on utilise généralement des tirants traversants. Cependant, le procédé de montage rend incompatible l'utilisation d'un tube hélicoïdal et de tirants traversants.

Afin de pallier ces inconvénients, la présente invention a pour but de proposer un servofrein du type mentionné à l'introduction et qui permet à la fois l'utilisation de tirants, une mesure de la pression au moins dans la chambre arrière et sur un capteur placé sur la face avant et qui offre, en outre, un assemblage simple dudit servofrein.

A cet effet, l'invention a pour objet un servofrein comprenant une enveloppe rigide constituée de deux coquilles, le couvercle et le cylindre, assemblées à l'aide de tirants traversants et comportant une chambre avant et une chambre arrière à volume variable, la chambre avant étant reliée en fonctionnement en permanence à une première source de pression tandis que la chambre arrière est reliée à une seconde source de pression, ledit servofrein comportant un capteur de pression mesurant au moins la pression dans la chambre arrière, caractérisé en ce que ledit capteur de pression est monté à l'extrémité avant d'un tirant traversant, ledit tirant présentant une structure évidée qui définit au moins une chambre de transmission de la pression de la chambre arrière vers le capteur de pression, le tirant présentant des orifices de communication entre ladite chambre de pression arrière et la chambre de transmission.

Ainsi, de manière avantageuse, les tirants traversants de structure évidée présentent sensiblement les mêmes caractéristiques de dimensions externes et de résistance que les tirants traversants pleins classiquement utilisés, de telle sorte qu'ils remplacent de manière efficace les tirants classiques lors de l'assemblage du servofrein mais, en outre, ils contribuent à la simplification de la structure dudit servofrein en constituant un moyen de transmission de la pression de la chambre arrière vers le capteur de pression situé dans la partie avant dudit servofrein en utilisant le moins de pièces possibles.

Selon une forme de réalisation préférée de l'invention, le tirant traversant à structure évidée comporte en outre une aiguille interne creuse sertie de manière étanche dans ladite structure, le tirant traversant présentant alors d'une part une chambre de transmission de la pression de la chambre arrière vers le capteur qui est définie par l'aiguille creuse et d'autre part une chambre de transmission de la pression de la chambre avant vers le capteur qui est définie entre le tirant et l'aiguille, le tirant présentant des orifices de communication entre ladite chambre de pression avant et la chambre de transmission définie autour de l'aiguille ainsi que des orifices de communication entre la chambre de pression arrière et la chambre de transmission définie dans l'aiguille.

On décrira maintenant plus en détail l'invention en référence à des exemples de réalisation et au dessin annexé dans lequel :
La figure 1 représente une vue en coupe longitudinale d'un servo-frein selon une première forme de réalisation de l'invention ; et
La figure 2 représente une vue en coupe longitudinale d'un servofrein selon une seconde forme de réalisation de l'invention.

Un servofrein selon l'invention comprend une enveloppe rigide 1 constituée de deux coquilles, formant d'une part le couvercle 2 et d'autre part le cylindre 3, qui sont assemblées à l'aide de tirants traversants 4.

A l'intérieur de l'enveloppe 1 du servofrein, une chambre avant 6 et une chambre arrière 7 à volume variable sont séparées l'une de l'autre par une membrane étanche souple reposant sur une jupe 8, la chambre avant 6 étant, en fonctionnement, reliée en permanence à une première source de pression délivrant une première pression (source de vide).

La jupe 8 entraîne un corps de piston 9 lors des variations de volume des chambres 6, 7. Le corps de piston 9 possède des canaux de communication entre les chambres avant 6 et arrière 7.

Une tige de commande 10 est mobile dans le corps de piston 9 entre une position de repos et une position d'actionnement extrême en fonction d'une résultante de forces qui agit sur elle et qui comprend une force d'entrée exercée suivant une direction axiale d'actionnement tandis qu'un plongeur distributeur 11 est entraîné par la tige de commande 10.

Ce plongeur distributeur 11 commande une valve munie d'un premier clapet d'obturation d'un canal de communication entre les chambres arrière et avant 6, 7 et un deuxième clapet d'ouverture, sur commande, du canal d'alimentation en air de la chambre arrière du servofrein. Le piston pneumatique 9 entraîne une tige de poussée 13 prenant appui sur un piston primaire d'un maître cylindre non représenté.

Cet ensemble de caractéristiques est bien connu et ne sera pas décrit plus en détail.

Le tirant traversant 4 présente une structure creuse évidée et pourvue d'orifices 4a, dans sa partie se situant au niveau de la chambre arrière 7, mettant en communication ladite chambre arrière 7 avec l'intérieur du tirant 4.

A l'extrémité avant du tirant 4, en saillie de l'enveloppe 1, est monté un capteur de pression par l'intermédiaire d'une cloche de fixation 12.

La structure creuse du tirant 4 définit une chambre de transmission 4b de la pression de la chambre arrière 7 vers le capteur de pression.

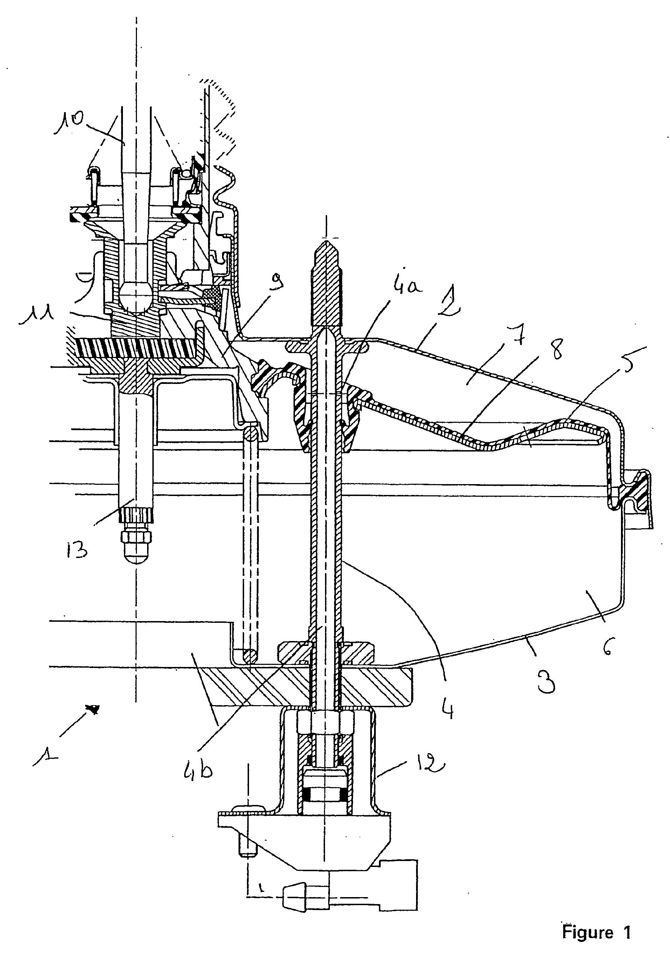

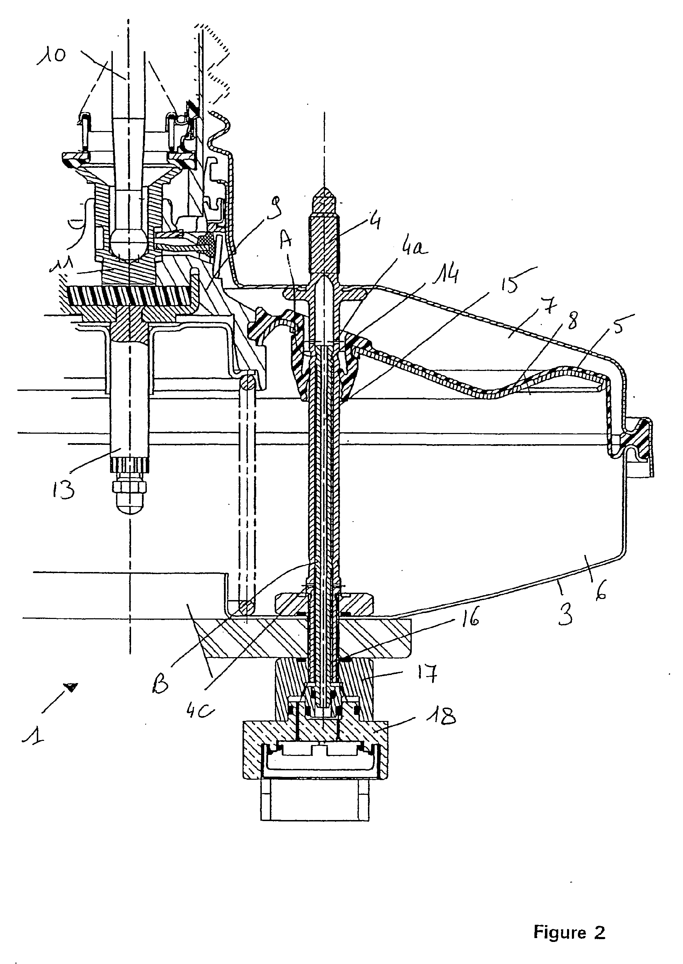

A la figure 2, on a représenté une seconde forme de réalisation dans laquelle les éléments identiques portent les mêmes références qu'à la figure 1.

Dans la structure creuse du tirant 4, on a mis en place une aiguille creuse 14 qui est sertie de manière étanche, aux points A et B dans le tirant 4, l'aiguille creuse 14 définissant une chambre de transmission 15 de la chambre arrière 7 vers le capteur 18 tandis qu'une chambre de transmission 16 est définie entre l'aiguille creuse 14 et le tirant 4 depuis la chambre avant 6 vers le capteur 13 par l'intermédiaire d'orifices de communication 4c du tirant 4 au niveau de sa portion s'étendant dans ladite chambre avant 6 au-delà du point d'étanchéité B.

Le capteur 18 est monté, dans cette forme de réalisation, par l'intermédiaire d'un adaptateur 17.

## Revendications

1. Servofrein comprenant une enveloppe (1) rigide constituée de deux coquilles, le couvercle (2) et le cylindre (3), assemblées à l'aide de tirants traversants (4) et comportant une chambre avant (6) et une chambre arrière (7) à volume variable, la chambre avant (6) étant reliée en fonctionnement en permanence à une première source de pression tandis que la chambre arrière (7) est reliée à une seconde source de pression, ledit servofrein comportant un capteur de pression (18) mesurant au moins la pression dans la chambre arrière (7),
**caractérisé en ce que** ledit capteur de pression (18) est monté à l'extrémité avant d'un tirant traversant (4), ledit tirant (4) présentant une structure évidée qui définit au moins une chambre de transmission (4b, 15) de la pression de la chambre arrière (7) vers le capteur de pression (18), le tirant (4) présentant des orifices de communication (4a) entre ladite chambre de pression arrière (7) et la chambre de transmission (4b).

2. Servofrein selon la revendication 1,
**caractérisé en ce que** le tirant traversant (4) à structure évidée comporte en outre une aiguille (14) interne creuse sertie de manière étanche dans ladite structure, le tirant traversant (4) présentant alors d'une part une chambre de transmission (15) de la pression de la chambre arrière (7) vers le capteur (18) qui est définie par l'aiguille creuse (14) et d'autre part une chambre de transmission (16) de la pression de la chambre avant (6) vers le capteur (18) qui est définie entre le tirant (4) et l'aiguille (14), le tirant (4) présentant des orifices de communication (4c) entre ladite chambre de pression avant (6) et la chambre de transmission (16) définie autour de l'aiguille (14) ainsi que des orifices de communication (4a) entre la chambre de pression arrière (7) et la chambre de transmission (15) définie dans l'aiguille (14).

## Claims

1. Servobrake, comprising a rigid jacket (1), made up of two shells, namely the cover (2) and the cylinder (3), which are assembled by means of through-tie bars (4), and comprising variable-volume front and rear chambers (6, 7), the front chamber (6) being operatively permanently connected to a first pressure source whereas the rear chamber (7) is connected to a second pressure source, said servobrake comprising a pressure sensor (18) for the measurement of at least the pressure inside the rear chamber (7),
**characterised in that** said pressure sensor (18) is attached to the front end of a through-tie bar (4), said tie bar (4) having a hollowed-out body defining at least one chamber (4b, 15) for the pressure transmission from the rear chamber (7) towards the pressure sensor (18), said tie bar (4) comprising ports (4a) connecting said rear pressure chamber (7) with the transmission chamber (4b).

2. Servobrake according to claim 1, **characterised in that** the hollowed-out through-tie bar (4) further comprises a hollow inner needle (14), set in a leakproof manner in said hollowed-out body, wherein the through-tie bar (4) includes, on the one hand, a chamber (15) for the pressure transmission from the rear chamber (7) towards the sensor (18), such chamber being formed by the hollow needle (14) and, on the other hand, a chamber (16) for the pressure transmission from the front chamber (6) towards the sensor (18), said chamber being defined between the tie bar (4) and the needle (14), and **in that** the tie bar (4) comprises ports (4c) connecting said front pressure chamber (6) with the transmission chamber (16), defined about the needle (14), as well as ports (4a) connecting the rear pressure chamber (7) with the transmission chamber (15), formed in the needle (14).

## Patentansprüche

1. Servobremse mit einem starren Gehäuse (1), das aus zwei Schalen, dem Deckel (2) und dem Zylinder (3), besteht, die mittels durchgehender Zugbolzen (4) verbunden sind, und eine vordere Kammer (6) und eine hintere Kammer (7) mit variablem Volumen aufweist, wobei die vordere Kammer (6) im Betrieb permanent mit einer ersten Druckquelle verbunden ist, während die hintere Kammer (7) mit einer zweiten Druckquelle verbunden ist, wobei die Servobremse einen Drucksensor (18) aufweist, der zumindest den Druck in der hinteren Kammer (7) misst,
**dadurch gekennzeichnet, dass** der Drucksensor (18) am vorderen Ende eines durchgehenden Zugbolzens (4) angebracht ist, wobei der Zugbolzen (4) eine ausgehöhlte Struktur aufweist, die mindestens eine Kammer (4b, 15) zur Übertragung des Drucks der hinteren Kammer (7) zum Drucksensor (18) begrenzt, und wobei der Zugbolzen (4) Öffnungen (4a) zur Verbindung zwischen der hinteren Druckkammer (7) und der Übertragungskammer (4b) aufweist.

2. Servobremse nach Anspruch 1,
**dadurch gekennzeichnet, dass** der durchgehende Zugbolzen (4) mit ausgehöhlter Struktur ferner eine innere hohle Nadel (14) aufweist, die in dichter Weise in der Struktur verstemmt ist, wobei der durchgehende Zugbolzen (4) dann einerseits eine Kammer (15) zur Übertragung des Drucks der hinteren Kammer (7) zum Sensor (18) aufweist, die durch die hohle Nadel (14) begrenzt ist, und andererseits eine Kammer (16) zur Übertragung des Drucks der vorderen Kammer (6) zum Sensor (18), die zwischen dem Zugbolzen (4) und der Nadel (14) begrenzt ist, wobei der Zugbolzen (4) Öffnungen (4c) zur Verbindung zwischen der vorderen Druckkammer (6) und der um die Nadel (14) begrenzten Übertragungskammer (16) und Öffnungen (4a) zur Verbindung zwischen der hinteren Druckkammer (7) und der in der Nadel (14) begrenzten Übertragungskammer (15) aufweist.
